# EUROPÄISCHE PATENTANMELDUNG

(11) **EP 1 429 001 A2**
(43) Veröffentlichungstag der Anmeldung: **16.06.2004**
(21) Anmeldenummer: 03104164.3
(22) Anmeldetag: 12.11.2003
(51) Int. Cl.: F02C 7/045

(54) **Ansaugschalldämpfer für Gasturbinen**

(30) Priorität: 25.11.2002 DE 10254824
(71) Anmelder: Alstom Technology Ltd, 5400 Baden (CH)
(72) Erfinder: FRUTSCHI, Hans Ulrich, 5223, Riniken (CH)

(57) **Zusammenfassung**

Die vorliegende Erfindung betrifft einen Schalldämpfer (25a) zur Dämpfung von in einem Ansaugluftstrom (10, 27) einer Gasturbine (1-3) entstehendem Lärm. Erfindungsgemäss weist dabei der Schalldämpfer (25a) Mittel (31,32,33,34) zur Einbringung von Wasser und/oder Dampf in den Ansaugluftstrom (10, 27) auf. Diese Mittel können insbesondere in Form von Venturi-Rohren (31) ausgebildet sein, wobei das Wasser (29) insbesondere oberhalb der Sättigungsgrenze dem Luftstrom (27) über an der engsten Stelle angeordnete Düsen (33) zugeführt wird. Auf diese Weise lässt sich die Schalldämpfung gleichzeitig mit der Einbringung von Wasser zur Leistungserhöhung oder zur allgemeinen Regulierung der Gasturbine kombinieren, dies bei einer vergleichsweise einfachen Konstruktion.

## Beschreibung

### TECHNISCHES GEBIET

Die vorliegende Erfindung betrifft einen Schalldämpfer zur Dämpfung von Lärm in einem Ansaugluftstrom einer Gasturbine.

### STAND DER TECHNIK

Die Verbrennungsluft für eine Gasturbine wird typischerweise über einen Ansaugkanal angesaugt, in einem Kompressor komprimiert und anschliessend einer Brennkammer zugeführt. Die hohen Strömungsgeschwindigkeiten im Ansaugluftstrom zusammen mit den dabei auftretenden Turbulenzen führen zu hochfrequentigem Lärm. Üblicherweise werden deshalb im Ansaugkanal von Gasturbinen nicht nur Filter angeordnet, sondern zusätzlich eigens dafür konstruierte Schalldämpfer, welche auf der einen Seite die auftretenden Turbulenzen reduzieren und gleichzeitig den vorhandenen Schall zu absorbieren in der Lage sind. Typischerweise müssen im Zusammenhang mit diesem Schall Normen erfüllt werden, um überhaupt eine Betriebserlaubnis zu erhalten.

Entsprechend existiert eine Vielzahl von Dokumenten, welche spezifische Konstruktionen von derartigen Schalldämpfern eigens für Gasturbinen beschreiben. So z. B. die US 4,204,586 der BBC, welche einen Schalldämpfer für die Dämpfung des Schalls in der Einleitung von Ansaugluft in eine Ringkammer unmittelbar stromauf des Kompressors beschreibt. Als weitere Dokumente sind die US 4,667,769, US 2,749,998, sowie die US 2,869,670 anzuführen, welche weitere spezifische Konstruktionen von Schalldämpfern angeben. Ausserdem sind spezielle Konstruktionen für Bereiche bekannt, in welchen der Ansaugluftstrom umgelenkt wird, so z. B. in der US 5,140,819 dargestellt.

Die typischerweise heutzutage verwendeten Schalldämpfer bestehen im wesentlichen aus einer Vielzahl von zylindrischen, parallel nebeneinander angeordneten Rohrabschnitte, durch welche die Ansaugluft hindurchzutreten gezwungen ist. Dabei werden Turbulenzen verhindert resp. reduziert, und Schall wird insbesondere durch entsprechende Beschichtungen oder Ausschäumungen absorbiert.

### DARSTELLUNG DER ERFINDUNG

Der Erfindung liegt demnach die Aufgabe zugrunde, einen alternativen, konstruktiv einfachen Schalldämpfer zur Verhinderung der Lärmentwicklung im Ansaugkanal einer Gasturbine vorzuschlagen.

Die Lösung dieser Aufgabe wird dadurch erreicht, dass der Schalldämpfer Mittel zur Einbringung von Wasser und/oder Dampf in den Ansaugluftstrom aufweist.

Der Kern der Erfindung besteht somit darin, nicht, wie nach dem Stand der Technik üblich, einen Schalldämpfer im Ansaugluftkanal anzuordnen und bei entsprechendem Bedarf zusätzlich eine separate Wassersprühvorrichtung zur Einbringung von Wasser und/oder Dampf in die Ansaugluft, sondern vielmehr direkt eine Wassersprühvorrichtung in den Schalldämpfer zu integrieren. Es zeigt sich nämlich überraschenderweise, dass sich die Strömungsverhältnisse im Bereich eines Schalldämpfers besonders gut zur Einbringung von Wasser und/oder Dampf eignen, und dass insbesondere bei der Einbringung von kleinen Tropfen diese Einbringung durch die Elemente des Schalldämpfers unterstützt respektive verbessert wird.

Ausserdem verbessert sich durch das Einsprühen von Wasser die schalldämpfende Wirkung eines derartigen Schalldämpfers. Wassersprühvorrichtungen werden zur Erhöhung der Leistung von Gasturbinen eingesetzt, da sich durch deren Verwendung der Massenstrom erhöht und die Temperaturen erniedrigt werden, somit eine höhere Befeuerung bei gleicher Materialbelastung ermöglicht wird.

Wasser kann dabei entweder in Form von Dampf, d. h. in Form von Luftbefeuchtung zugeführt werden, oder aber in Form von kleinen Tropfen. Wasser kann mit anderen Worten auch oberhalb der Sättigungsgrenze zugeführt werden. Diese Technik, welche als "over-fogging" bekannt ist, wird üblicherweise durchgeführt, indem kleine Flüssigkeitstropfen einer bestimmten Grösse dem Luftstrom zugeführt werden, welcher in den Kompressor eingeleitet wird (so genannte "wet compression"). Diese Technik erlaubt es, die verfügbare Leistung der Gasturbine zu erhöhen, weil die zur Verdichtung der Eintrittsluft erforderliche Arbeit reduziert wird. Dies infolge der Tatsache, dass die Verdampfungsenergie des Eintrittsluftstroms diesen kühlt, wenn er die Kompressorstufen passiert. Dies passiert grundsätzlich immer bei Luftfahrtturbinen bei Regenwetter.

Es gibt eine Vielzahl von Dokumenten, welche diese so genannte "wet compression" im Zusammenhang mit Gasturbinen beschreiben. So z. B. die US 5,930,990 sowie deren continuation-in-part, die US 5,867,977, welche beide einen Apparat sowie ein Verfahren zur Erhöhung der Leistung einer Gasturbine beschreiben unter Verwendung von "wet compression". Auf der anderen Seite beschreibt die WO 00/50739 eine spezielle Vorrichtung zur Überwachung von destruktiver "wet compression ", d. h. eine Vorrichtung, welche die bei diesem Verfahren auftretenden Verzerrungen der Gasturbine überwacht und gegebenenfalls die Zuführung von Wasser entsprechend steuert. Ein anderes Dokument in diesem Zusammenhang ist die US 6,216,443, in welchem ebenfalls eine Vorrichtung beschrieben wird, mit welcher kleine Flüssigkeitstropfen in den Eintrittsluftstrom des Kompressors eingebracht werden, wobei diese Einbringung zwischen Kompressor und stromab eines Schalldämpfers (so genannter "silencer") erfolgt. Die Tropfen, welche dem Luftstrom zugeführt werden, weisen dabei eine spezifische Tropfengrösse von zwischen 1 Mikrometer bis 50 Mikrometer auf. Eine weitere Schrift des gleichen Anmelders, die US 6,378,284, die Stammanmeldung zur genannten US 6,216,443, beschreibt eine Gasturbine, bei welcher Flüssigkeitstropfen dem Luftstrom vor dem Kompressor zugegeben werden, wobei diese Flüssigkeitstropfen wenigstens teilweise vor dem Eintritt in den Kompressor verdampfen und damit den Luftstrom kühlen, und anschliessend im Kompressor unter weiterer Abkühlung des Luftstroms fertig verdampfen. Die Flüssigkeitstropfen werden dabei stromab eines Eintrittsblechs mit Luftschlitzen, hinter welchem üblicherweise ausserdem ein Luftfilter oder ein Schalldämpfer angeordnet ist, in den Luftstrom eingebracht. In all diesen Dokumenten sind aber stets Schalldämpfer und Wassersprühvorrichtung als separate Einheiten im Ansaugluftpfad ausgebildet.

Durch die erfmdungsgemässe Vorrichtung kann entweder auf die Verwendung eines weiteren Schalldämpfers im Eintrittsluftstrom gänzlich verzichtet werden, oder aber es ist möglich, einen derartigen Schalldämpfer mit einem bereits bestehenden Schalldämpfer zu kombinieren und so die Schallbelastung weiter zu reduzieren. Ebenso kann eine erfindungsgemässe Vorrichtung entweder ohne weitere Wassersprühvorrichtungen im Ansaugluftpfad verwendet werden, oder aber es ist möglich, einen derartigen Schalldämpfer mit integrierter Wassersprühvorrichtung mit weiteren "over-fogging-grids" zu kombinieren. Überraschenderweise kann so in konstruktiv einfacher Modifikation entweder auf einen weiteren Schalldämpfer und/oder auf eine weitere Wassersprühvorrichtung verzichtet werden oder aber die Schallbelastung weiter reduziert werden. Entsprechend eignet sich ein derartiger Schalldämpfer ganz besonders im Zusammenhang mit der Nachrüstung von bereits bestehenden Anlagen.

Eine erste bevorzugte Ausführungsform des erfindungsgemässen Schalldämpfers zeichnet sich dadurch aus, dass der Schalldämpfer als mehrere, im wesentlichen parallel zur Strömungsrichtung des Ansaugluftstroms angeordnete röhrenförmige Elemente ausgebildet ist. Dabei können die Hohlräume zwischen den Elementen schalldämpfend ausgebildet werden, was beispielsweise mit Hilfe von speziellen Beschichtungen oder mit Hilfe von Ausschäumungen mit absorbierendem Material realisiert werden kann.

Gemäss einer weiteren bevorzugten Ausführungsform wird Wasser und/oder Dampf über Düsen in den Ansaugluftstrom eingebracht, wobei die Düsen auf der Innenseite der röhrenförmigen Elemente angeordnet sind, und das Wasser in den Innenraum eindüsen, und wobei bevorzugt pro Element wenigstens zwei Düsen auf dem Umfang verteilt vorhanden sind. Durch die Anordnung der Düsen auf der Innenseite der Röhren kann der synergistische Effekt der Kombination von Schalldämpfer und Wassersprühvorrichtung optimal realisiert werden. Die Strömungsverhältnisse im inneren des Rohres eignen sich besonders gut für die Einbringung von Wassertropfen. Noch besser werden Wassertropfen eingebracht, wenn die röhrenförmigen Elemente entlang ihrer Länge einen variablen Durchmesser aufweisen, wobei sie insbesondere bevorzugt im mittleren Bereich eine Verjüngung aufweisen, wobei die Verjüngung insbesondere derart ausgebildet ist, dass die Elemente eintrittseitig und austrittseitig im wesentlichen den gleichen Durchmesser aufweisen, und im mittleren Bereich einen um 20 bis 30 % geringeren Durchmesser aufweisen. Es handelt sich dabei mit anderen Worten um so genannte Venturi-Rohre, bei welchen im Bereich des reduzierten Durchmessers eine erhöhte Strömungsgeschwindigkeit auftritt, weshalb die Anordnung der Düsen an dieser Stelle die Verteilung von Wasser in den Luftstrom besonders verbessert.

Eine weitere bevorzugte Ausführungsform des erfindungsgemässen Schalldämpfers verfügt über wenigstens zwei tragende Wände, welche im wesentlichen senkrecht zur Strömungsrichtung des Ansaugluftstroms angeordnet sind, und zwischen welchen das Wasser zugeführt wird. Typischerweise sind bei einer derartigen Konstruktion die röhrenförmigen Elemente in durch die Wände hindurchtretender Weise eingelassen.

Insbesondere für das bereits eingangs erwähnte und besonders effiziente so genannte "over-fogging" erweist es sich als vorteilhaft, die Düsen so auszulegen, dass Wasser mit einer Tröpfchengrösse im Bereich von 10 bis 50 µm in den Ansaugluftstrom eingedüst wird, wobei insbesondere bevorzugt die eingespritzte Wassermenge über die Sättigungsgrenze hinaus bemessen ist (sog. over-fogging).

Weitere bevorzugte Ausführungsformen des erfindungsgemässen Schalldämpfers sind in den abhängigen Ansprüchen beschrieben.

Ausserdem betrifft die vorliegende Erfmdung ein Verfahren zur Leistungserhöhung oder Leistungsregelung einer Gasturbine unter Verwendung eines Schalldämpfers, wie er oben beschrieben wird. Insbesondere düst dabei der Schalldämpfer das Wasser im wesentlichen unmittelbar stromauf einer ersten Kompressorstufe und/oder einer zweiten Kompressorstufe und gegebenenfalls stromab eines weiteren Schalldämpfers und gegebenenfalls stromab oder stromauf einer weiteren Wassersprühvorrichtung in den Ansaugluftstrom ein.

Weitere bevorzugte Ausführungsformen des erfindungsgemässen Verfahrens sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Darstellung einer Gasturbinenanlage mit zwei Kompressorstufen;
- Fig. 2 a): eine weitere schematische Darstellung einer Gasturbinenanlage und deren Luftzuführung zum Kompressor ; b) eine Darstellung gemäss Fig. 2a) mit einem erfindungsgemässen Schalldämpfer ;
- Fig. 3 a): einen Schnitt durch einen Schalldämpfer senkrecht zum Luftstrom ; b) eine Ansicht parallel zum Luftstrom auf einen Schalldämpfer gemäss Fig. 3a) ; und
- Fig. 4: einen detaillierten Teilschnitt durch ein einzelnes Venturi-Element eines Schalldämpfers.

### WEGE ZUR AUSFÜHRUNG DER ERFINDUNG

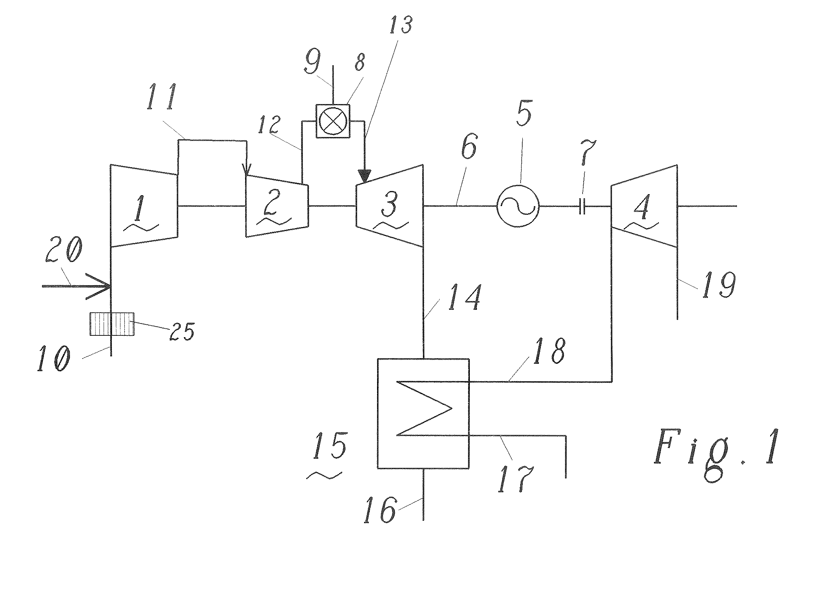

Fig. 1 zeigt in schematischer Darstellung eine Gasturbinenanlage, bei welcher typischerweise ein Schalldämpfer gemäss der Erfindung Anwendung finden kann. Die Anlage verfügt über eine erste Kompressorstufe 1, welche die Ansaugluft 10 auf eine erste Druckstufe bringt, sowie über eine zweite Kompressorstufe 2, bei welcher der teilweise komprimierte Ansaugluftstrom 11 auf die endgültige Druckstufe angehoben wird. Die vollständig komprimierte Ansaugluft 12 wird anschliessend einer Brennkammer 8 zugeführt, in welcher Brennstoff 9 verbrannt wird. Die heissen Verbrennungsgase 13 werden einer Gasturbine 3 zugeleitet, darin entspannt und die dabei entstehenden entspannten heissen Gase 14 werden in einem der Gasturbine 3 nachgeschalteten Abhitzekessel 15 weiter abgekühlt und erst Stromab davon über einen Kamin 16 an die Umwelt abgegeben. Die beiden Kompressorstufen 1 und 2 sowie die Gasturbine 3 sind auf einer gemeinsamen Welle 6 angeordnet, diese Welle 6 treibt einen Generator 5 an. Im Abhitzekessel 15 wird zugeführtes Wasser 17 in einem gegebenenfalls mehrstufigen Prozess erhitzt und verdampft, und der entstehende Dampf 18 wird in einer Dampfturbine 4 zur weiteren Energiegewinnung entspannt. Die Dampfturbine 4 kann entweder an einem separaten Generator angeschlossen sein, oder aber, wie in Fig. 1 dargestellt, über eine Kupplung 7 an der gemeinsamen Welle 6 den gleichen Generator 5 antreiben.

Zur Unterdrückung des im Ansaugkanal auftretenden Lärms ist im Ansaugkanal ein Schalldämpfer 25 angeordnet. Typischerweise wird ausserdem zur Leistungserhöhung über eine separate Wassersprühvorrichtung dem Ansaugluftstrom 10 Wasser 20 in Tröpfchenform zugeführt. In Fig. 1 ist dargestellt, wie Wasser vor der ersten Kompressorstufe 1 und unmittelbar stromab des Schalldämpfers 25 zugeführt wird, es ist aber möglich alternativ oder zusätzlich auch Wasser den in den Pfad der teilweise komprimierten Ansaugluft 11 einzubringen.

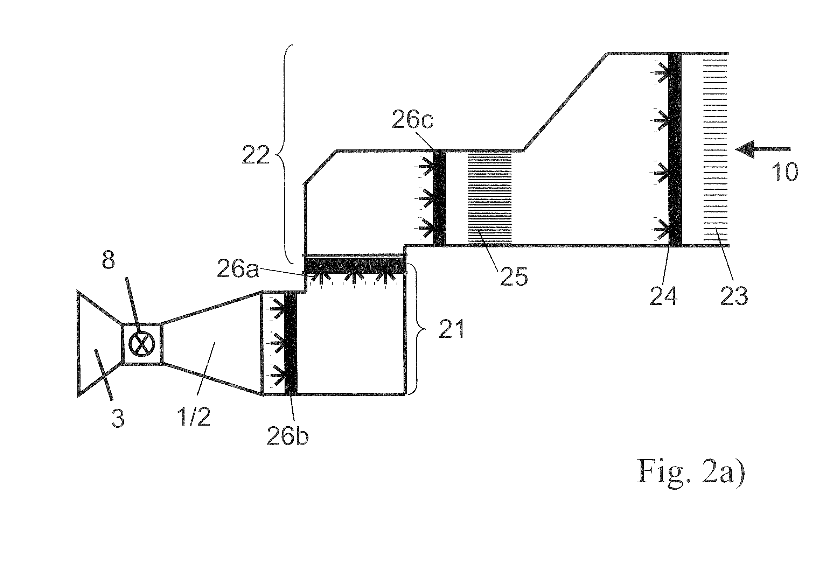

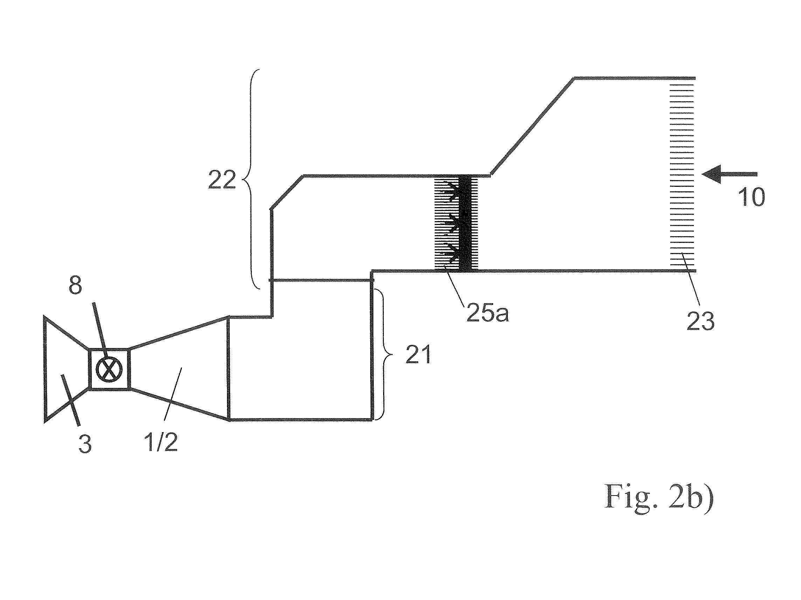

Fig. 2a) zeigt eine schematische Darstellung des Ansaugluftpfades einer Gasturbinenanlage nach Fig. 1 nach dem Stand der Technik. Typischerweise wird die Ansaugluft 10 zunächst durch einen Filter 23 geführt, wobei diesem Filter gegebenenfalls eine mit Luftschlitzen versehene Wandung oder ein Blech vorgeschaltet sein kann. Ebenfalls im Pfad der Ansaugluft 10 befindet sich ein Schalldämpfer 25, welcher den beim Ansaugen entstehenden Lärm unterdrücken soll. Wassersprühvorrichtungen sind üblicherweise in einem derartigen Ansaugpfad an unterschiedlichen Stellen anbringbar. Einerseits ist es möglich, sie z. B. in Form einer Kühleinheit 24 stromab des Filters 23 und stromauf des Schalldämpfers 25 anzubringen. Alternativ oder zusätzlich ist es möglich, derartige Wassersprühvorrichtungen stromab des Schalldämpfers 25 anzuordnen. Dabei können derartige Wasser-Vernebelungsgitter bei einem gekrümmten Pfad, wie in Fig. 2 dargestellt, wo zunächst auf einer höheren Ebene ein Ansaugluft-Kanal 22 vorhanden ist und nach einer Umlenkung ein Ansaugluft-Kollektor 21, an unterschiedlichen Stellen angeordnet werden. Entweder innerhalb des Ansaugluft-Kanals 22 unmittelbar stromab des Schalldämpfers 25, wie mit dem Bezugszeichen 26c angedeutet ist, oder aber direkt bei der Stelle der Umlenkung gemäss Bezugszeichen 26a oder im wesentlichen unmittelbar vor dem Eingang in den Kompressor 1/2, wie dies mit dem Bezugszeichen 26b angedeutet ist.

Fig. 2b) zeigt beispielhaft, wie ein erfindungsgemässen Schalldämpfer 25a in einem derartigen Ansaugluftpfad eingesetzt werden kann. Wie bereits eingangs erwähnt verfügt der erfmdungsgemässe Schalldämpfer über eine integrierte Vorrichtung zum Versprühen von Wasser respektive von kleinen Tropfen. Somit reduziert sich die Anzahl der Bauteile im Ansaugluftpfad, und es sind im Prinzip keine weiteren Wassersprühvorrichtungen mehr erforderlich, um eine Leistungssteigerung der Gasturbine zu ermöglichen.

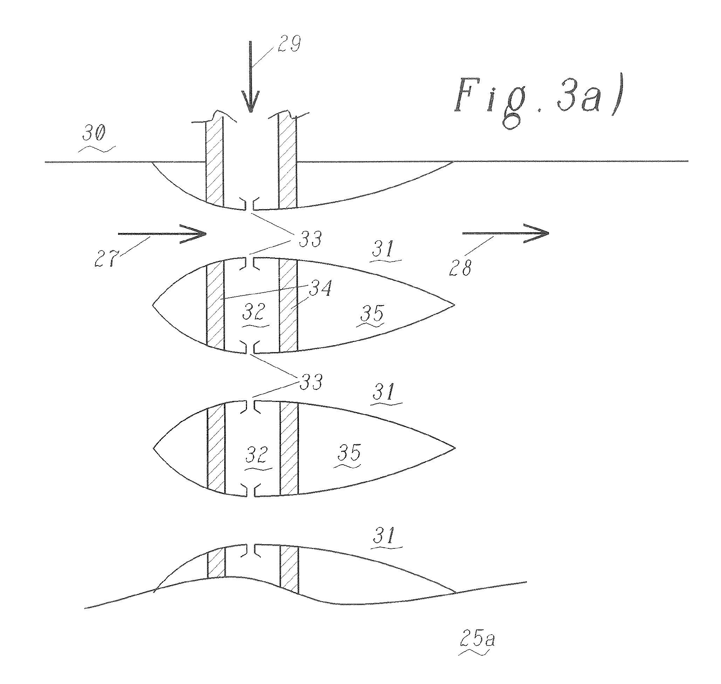

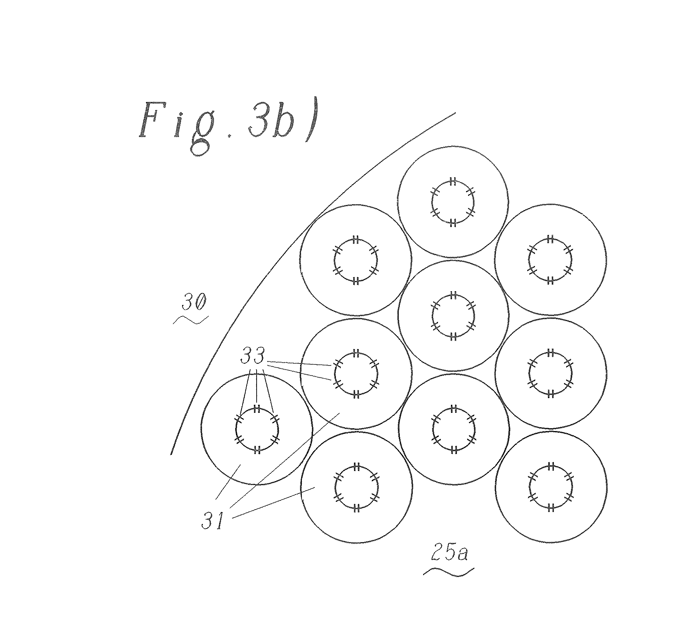

Wie sich ein erfindungsgemässer Schalldämpfer 25a, welcher gleichzeitig auch als Wassersprühvorrichtung wirkt, tatsächlich konstruieren lässt, ist in Fig. 3 beispielhaft dargestellt. Der Ansaugluftschalldämpfer 25a umfasst dabei rohrförmige Elemente, welche in Fig. 3 als Venturi-Rohre 31 ausgebildet sind. Mit anderen Worten handelt es sich bei den Elementen 31 nicht um zylindrische Elemente sondern vielmehr um Röhren, welche im mittleren Bereich eine Verjüngung aufweisen. Die Strömungsgeschwindigkeit in diesem Bereich der Verjüngung ist dabei wesentlich höher als beim Eintritt respektive beim Austritt aus der Röhre. Die einzelnen Venturi-Rohre 31 sind parallel nebeneinander in Strömungsrichtung der Ansaugluft angeordnet. Die einzelnen Venturi-Rohre 31 können kreisrunden Querschnitt aufweisen, wie dies in Fig. 3b) dargestellt ist, es ist aber auch möglich, um eine möglichst dichte Packung zu erlauben, die einzelnen Elemente mit vieleckigem Querschnitt auszubilden, z. B. als 6-ecke, sodass sich eine bienenwabenartige Anordnung realisieren lässt, bei welcher die Zwischenräume möglichst klein ausfallen. Wie in Fig. 3a erkennbar, wird die tragende Struktur einer derartigen Vorrichtung durch wenigstens zwei Wände 34 realisiert.

Zwischen den zwei parallel zueinander und senkrecht zum Luftstrom angeordneten Wänden 34 kann in einfacher Weise die Zuführung des Wassers 29 realisiert werden. Die beiden Wände 34 verfügen entsprechend über Bohrungen, in welche die Venturi-Rohre 31 eingelassen respektive eingeschweisst sind. Die Ansaugluft 27 tritt in die einzelnen Elemente ein, und durch die Verjüngung des Querschnitts erhöht sich im Bereich dieser Verjüngung die Strömungsgeschwindigkeit. Im Bereich der Verjüngung sind auf dem Umfang einzelne Düsen 33 angeordnet, durch welche das zugeführte Wasser 29 in den mit hoher Geschwindigkeit strömenden Luftstrom eingedüst wird. Wie in Fig. 3b) sichtbar sind z. B. 6 Düsen auf dem Umfang verteilt. Dabei werden die Düsen bevorzugt so ausgewählt, dass sich Tröpfchen einer Grösse im Bereich von 1 bis 50 µm ausbilden. Die Tröpfchenbildung wird durch die spezifische Strömung innerhalb des Venturi-Rohres 31 an der engsten Stelle weiter unterstützt. Entsprechend tritt stromab des Schalldämpfers 25a befeuchtete Luft 28 aus. Im Zwischenraum zwischen den einzelnen Venturi-Rohren 31 bilden sich Hohlräume 35. Diese Hohlräume können zur weiteren Unterstützung der schalldämpfenden Wirkung mit entsprechenden Materialien ausgefüllt werden. Dazu eignen sich z. B. spezielle Ausschäumungen. Die schalldämpfende Wirkung kann weiterhin durch entsprechende aus dem Bereich des Baus von Schalldämpfern konventioneller Art bekannte Beschichtungen unterstützt werden.

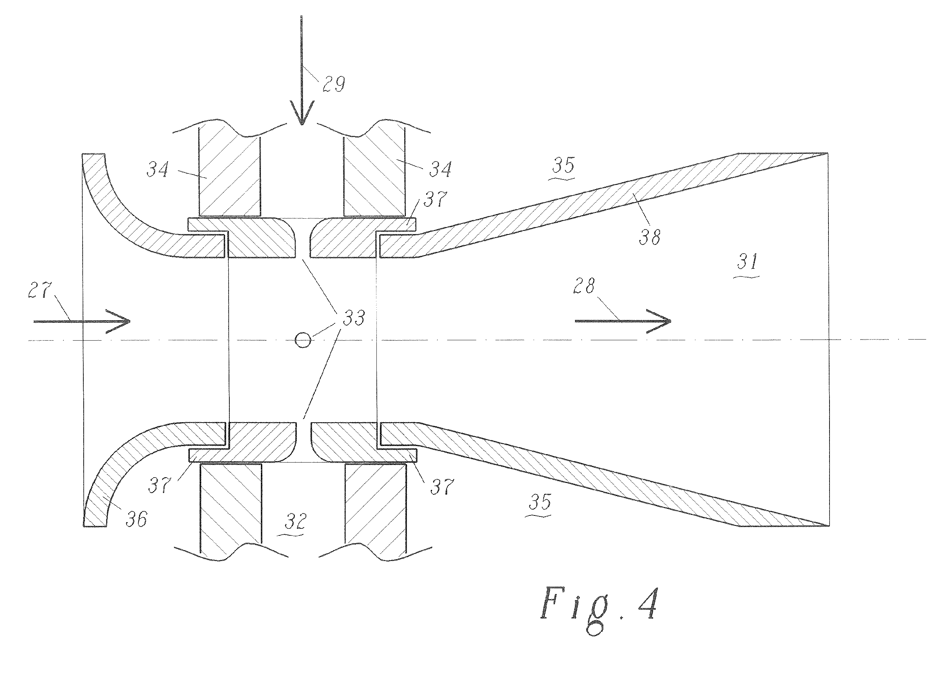

Fig. 4 zeigt ein weiteres Ausführungsbeispiel einer spezifischen Bauweise eines derartigen Venturi-Rohres 31, wie es in einem erfindungsgemässen Schalldämpfer Verwendung finden kann. Zur Bildung eines gesamten Schalldämpfers werden derartige Venturi-Rohre 31 in möglichst dichter Packung nebeneinander angeordnet. Das Venturi-Rohr 31 ist in diesem Fall aus einzelnen Elementen aufgebaut, um die Konstruktion zu vereinfachen. Auf der Anströmseite befindet sich ein Einlasselement 36, welches gewissermassen trompetenförmig ausgebildet ist. Das Rohr 31 verfügt in seinem verjüngten Bereich über einen zylindrischen Abschnitt, welcher durch ein Ringelement 37 gebildet wird. Dieses Ringelement 37 verfügt auf seinem Umfang verteilt über in diesem Fall 4 Bohrungen, welche als Düsen 33 wirken. Stromab dieses Ringelements 37 ist ein Auslasselement 38 angeordnet, welches den Strömungsquerschnitt im wesentlichen auf den Strömungsquerschnitt beim Eintritt in das Element 36 erweitert.

Diese Bauweise erlaubt eine einfache Konstruktion eines solchen Schalldämpfers, da in die zwei Seitenwände 34, zwischen welchen das Wasser 29 zugeführt wird, einfach entsprechend beabstandete durchgängige Bohrungen geführt werden müssen. Anschliessend können die Ringelemente 37, welche über die präzise anzufertigenden Öffnungen 33 verfügen, in diese Bohrungen eingesetzt und mit den Wänden 34 verschweisst werden. Oder es ist alternativ möglich, die Bohrungen mit einem Innengewinde zu versehen und die Ringelemente 37 mit einem entsprechenden Aussengewinde, sodass die Ringelemente 37 einfach in die Bohrungen eingeschraubt werden können. Anschliessend werden anströmseitig die Einlasselemente 36 in entsprechende im Ringelement 37 vorgesehene stufenförmige Erweiterungen eingesetzt, sodass die Innenwandung des entstehenden Rohres 31 möglichst glatt wird. Wiederum können die Elemente 36 entweder mit dem Ringelement 37 verschweisst oder verschraubt werden. Analog werden von der der Strömung abgewandten Seite her die Auslasselemente 38 in entsprechende Erweiterungen des Ringelementes 37 eingelassen und fest mit diesem verbunden.

Typischerweise verfügen derartige Venturi-Rohre 31 über einen Durchmesser beim Eintritt respektive Austritt von im Bereich von 20 bis 100 mm, und im verjüngten Bereich über einen Durchmesser von 10 bis 50 mm. Normalerweise sollte das Verhältnis zwischen Durchmesser am Eintritt und schmalster Stelle nicht grösser sein als 2, damit der durch die Verjüngung auftretende Strömungswiderstand im Ansaugpfad und die damit verbundenen Wirkungsgradverluste nicht zu gross werden.

### BEZUGSZEICHENLISTE

- 1: erste Kompressorstufe (niedriger Druck)
- 2: zweite Kompressorstufe (hoher Druck)
- 3: Gasturbine
- 4: Dampfturbine
- 5: Generator
- 6: Welle
- 7: Kupplung
- 8: Brennkammer
- 9: Brennstoffleitung, Brennstoff
- 10: Ansaugluft
- 11: teilweise komprimierte Ansaugluft
- 12: verdichtete Luft
- 13: heisse Verbrennungsluft, Heissgas
- 14: Abgas
- 15: Abhitzekessel
- 16: Kamin
- 17: Leitung zum Abhitzekessel (Wasser)
- 18: Leitung vom Abhitzekessel (Dampf)
- 19: Ausgang der Dampfturbine
- 20: Zuführung von Wasser zur Ansaugluft
- 21: Ansaugluft-Kollektor
- 22: Ansaugluft-Kanal
- 23: Filter
- 24: Kühleinheit
- 25: Schalldämpfer
- 25a: Ansaugschalldämpfer mit Wassereindüsung
- 26: Wasser-Vernebelungsgitter
- 27: Ansaugluft vor Vernebelungsgitter
- 28: befeuchtete Luft hinter Vernebelungsgitter
- 29: zugeführtes Wasser
- 30: Seitenwand von 21 respektive 22
- 31: Venturi-Rohr
- 32: Kanal für 29
- 33: Düsen
- 34: Seitenwände von 32
- 35: Hohlräume zwischen 31
- 36: Einlasselement von 31
- 37: Ringelemente
- 38: Auslasselement von 31

## Patentansprüche

1. Schalldämpfer (25a) zur Dämpfung von in einem Ansaugluftstrom (10, 27) einer Gasturbine (1-3) entstehendem Lärm,
**dadurch gekennzeichnet, dass**
der Schalldämpfer (25a) Mittel (31,32,33,34) zur Einbringung von Wasser und/oder Dampf in den Ansaugluftstrom (10, 27) aufweist.

2. Schalldämpfer (25a) nach Anspruch 1, **dadurch gekennzeichnet, dass** der Schalldämpfer (25a) als mehrere, im wesentlichen parallel zur Strömungsrichtung des Ansaugluftstroms (10,27) angeordnete röhrenförmige Elemente (31) ausgebildet ist.

3. Schalldämpfer (25a) nach Anspruch 2, **dadurch gekennzeichnet, dass** Hohlräume zwischen den Elementen (31) schalldämpfend ausgebildet sind.

4. Schalldämpfer (25a) nach einem der Ansprüche 2 oder 3, **dadurch gekennzeichnet, dass** Wasser und/oder Dampf über Düsen (33) in den Ansaugluftstrom eingebracht wird, wobei die Düsen (33) auf der Innenseite der röhrenförmigen Elemente (31) angeordnet sind, und das Wasser in den Innenraum eindüsen, und wobei bevorzugt pro Element (31) wenigstens zwei Düsen (33) auf dem Umfang verteilt vorhanden sind.

5. Schalldämpfer (25a) nach einem der Ansprüche 2 bis 4, **dadurch gekennzeichnet, dass** die röhrenförmigen Elemente (31) entlang ihrer Länge einen variablen Durchmesser aufweisen, wobei sie insbesondere bevorzugt im mittleren Bereich eine Verjüngung aufweisen, wobei die Verjüngung insbesondere derart ausgebildet ist, dass die Elemente (31) eintritseitig und austrittseitig im wesentlichen den gleichen Durchmesser aufweisen, und im mittleren Bereich einen um 20 bis 30 % geringeren Durchmesser aufweisen.

6. Schalldämpfer (25a) nach den Ansprüchen 4 und 5, **dadurch gekennzeichnet, dass** die Düsen (33) im Bereich der Verjüngung angeordnet sind.

7. Schalldämpfer (25a) nach einem der Ansprüche 2 bis 6, **dadurch gekennzeichnet, dass** wenigstens zwei tragende Wände (34) im wesentlichen senkrecht zur Strömungsrichtung des Ansaugluftstroms (10,27) angeordnet sind, zwischen welchen das Wasser (29) zugeführt wird, und in welche die röhrenförmigen Elemente (31) in durch die Wände (34) hindurchtretender Weise eingelassen sind.

8. Schalldämpfer (25a) nach einem der vorhergehenden Ansprüche, **dadurch gekennzeichnet, dass** Wasser mit einer Tröpfchengrösse im Bereich von 10 bis 50 µm in den Ansaugluftstrom (10, 27) über Düsen (33) eingedüst wird, wobei insbesondere bevorzugt die eingespritzte Wassermenge über die Sättigungsgrenze hinaus bemessen ist.

9. Verfahren zur Leistungserhöhung oder Leistungsregelung einer Gasturbine (1-3) unter Verwendung eines Schalldämpfers (25a) nach einem der Ansprüche 1 bis 8.

10. Verfahren nach Anspruch 9, **dadurch gekennzeichnet, dass** der Schalldämpfer (25a) das Wasser im wesentlichen unmittelbar stromauf einer ersten Kompressorstufe (1) und/oder einer zweiten Kompressorstufe (2) und gegebenenfalls stromab eines weiteren Schalldämpfers (25) und gegebenenfalls stromab oder stromauf einer weiteren Wassersprühvorrichtung (26) in den Ansaugluftstrom (10, 11, 27) eindüst.
